# EUROPÄISCHE PATENTSCHRIFT

(11) **EP 0 659 603 B1**
(45) Veröffentlichungstag und Bekanntmachung des Hinweises auf die Patenterteilung: **27.12.1996**
(21) Anmeldenummer: 94118286.7
(22) Anmeldetag: 21.11.1994
(51) Int. Cl.: B60K 15/04

(54) **Einfüllstutzen für einen Kraftstoffbehälter eines Kraftfahrzeuges**
Filler pipe for a fuel tank of a motor vehicle
Embout de remplissage d'un réservoir de carburant d'un véhicule automobile

(30) Priorität: 23.12.1993 DE 4344273
(43) Veröffentlichungstag der Anmeldung: 28.06.1995
(73) Patentinhaber: Bayerische Motoren Werke Aktiengesellschaft, 80788 München (DE)
(72) Erfinder: Koppi, Johannes, D-80935 München (DE); Strohmayer, Manfred, D-85540 Haar (DE)

(56) Entgegenhaltungen:
- DE-C- 3 602 844
- DE-U- 9 210 408

## Beschreibung

Die Erfindung betrifft einen Einfüllstutzen für einen Kraftstoffbehälter eines Kraftfahrzeuges gemäß dem Oberbegriff des Anspruchs 1.

Bei bekannten Einfüllstutzen können die Zapfpistolen oft nicht in einer genau definierten Lage eingehängt werden. So ist zum Beispiel die Einführtiefe der Zapfpistole, die Rastvorrichtung zum Einhängen der Zapfpistole, die seitliche Verdrehung der Zapfpistole sowie das Spiel der Zapfpistole im Einfüllstutzen in vertikaler Richtung nicht genau begrenzt bzw. festgelegt. Durch diese Freiheitgrade kann es zu einem vorzeitigen Abschalten der Zapfpistole, zu einem Herausspritzen von Kraftstoff aus dem Einfüllstutzen und zu Beschädigungen im Einfüllstutzen sowie an der Karosserie kommen.

In der DIN ISO 13331 betreffend die Kraftstoff-Einfüllstutzen an Kraftwagen ist festgelegt, welche Längen und Durchmesser eine Normzapfpistole für unverbleiten Kraftstoff und für verbleiten Kraftstoff aufweisen soll. Ferner ist in dieser DIN u. a. vorgeschrieben, daß die Normzapfpistole bei einem Einfüllstutzen mit Bleifreiklappe in seiner normalen Raststellung mindestens 22,5 mm über die Bleifreiklappe hineinragen muß. Darüber hinaus ergibt sich aus dieser DIN die Lage und Größe einer Haltelippe für einen an der Normzapfpistole ausgebildeten Haltering. Der Innenbereich eines im Einfüllstutzen angeordneten Einfüllstutzens soll entsprechend dieser DIN so ausgelegt werden, daß ein Winkel zwischen der Mittellinie der Normzapfpistole und einer Mittellinie der Einfüllstutzen-Dichtfläche innerhalb eines Winkelbereiches von +20° und -10° liegt. Ferner muß der Einfüllstutzen als Mindestschutz gegen ein Auslaufen von Kraftstoff so geneigt sein, daß die Mittellinie der Normzapfpistole in der normalen Raststellung einen Winkel von mindestens 30° mit der Horizontalen bildet, wobei das den Kraftstoff abgebende Ende der Normzapfpistole nach unten zeigen muß. Im übrigen wird vollinhaltlich auf die DIN ISO 13331 Bezug genommen. Darüber hinaus wird auf die USA-Norm SAE J 1140 verwiesen, auf der die oben genannte DIN Norm basiert.

Aus der DE-PS 36 05 708 ist ein Einfüllrohr eines Kraftstofftanks bekannt, das einen Einfüllstutzen mit einem trichterförmigen Anfangsbereich und einer sich daran anschließenden zylindrischen Führung aufweist. Die Führung ist durch eine Bleifreiklappe oder Verschlußklappe verschlossen. Dieser bekannte Einfüllstutzen ist jedoch nur für geradlinig verlaufende Einfüllstutzen geeignet. Verläuft das Einfüllrohr jedoch beispielsweise aufgrund beengter Platzverhältnisse gekrümmt, kann es bei diesem bekannten Einfüllstutzen dazu kommen, daß die Zapfpistole an der Wand des Einfüllstutzens anliegt und es dadurch zu einem Abschalten der Zapfpistole kommt.

Aufgabe der Erfindung ist es, einen Einfüllstutzen für einen Kraftstoffbehälter eines Kraftfahrzeuges zu schaffen, mit dem ein einfacher und störungsfreier Betankungsvorgang möglich ist.

Diese Aufgabe wird bei einem gattungsgemäßen Einfüllstutzen der eingangs genannten Art durch die kennzeichnenden Merkmale des Anspruchs 1 gelöst.

Der erfindungsgemäße Einfüllstutzen weist einen oberen Abschnitt auf, der Zumindest teilweise mit schräg verlaufenden Seitenwänden versehen ist, die einen schrägen Kegel oder Trichter bilden, an dem das vordere Ende der Zapfpistole zu einem unteren Abschnitt geführt wird.

An der Zapfpistole ist üblicherweise ein insbesondere kegelförmiger Ring oder eine Feder oder eine Glocke für eine Absaugvorrichtung vorgesehen. Diese Einrichtungen dienen zum einen als Tiefenanschlag, wenn sie an den Seitenwänden des oberen Abschnittes zur Anlage kommen. Ferner dienen diese Bauteile als Verrastungsmittel, die im eingerasteten Zustand im Einfüllstutzen die Zapfpistole in axialer Richtung, entgegengesetzt zur Einführrichtung im Einfüllstutzen haltern.

Der untere Abschnitt weist im Querschnitt ein Langloch auf, wobei die Breite des Langloches über die Länge des unteren Abschnittes konstant ist und dem Durchmesser des Zapfpistolenrohres entspricht. Die Länge des Langloches ist entweder ebenfalls über die Länge des unteren Abschnittes konstant oder sie verringert sich zur Verschlußklappe hin. Dadurch ist es möglich, daß beim Einführen der Zapfpistole im wesentlichen nur eine begrenzte Auf- und Abwärtsbewegung möglich ist.

Aufgrund des an der Zapfpistole ausgebildeten oder angeordneten Anschlages muß die Zapfpistole spätestens ab einer bestimmten Einführtiefe angehoben werden, damit der Anschlag über einen als Einrastmittel dienenden Vorsprung, der am äußeren Rand des Einfüllstutzens ausgebildet ist, hinwegkommt. Unmittelbar danach stößt der Anschlag an den Seitenwänden des oberen Abschnittes an und der Anschlag der Zapfpistole rutscht in einen dafür vorgesehenen Raum, der nach außen hin durch den Vorsprung und nach innen durch die Seitenwände des oberen Abschnittes begrenzt ist. Durch diese Bauweise des Einfüllstutzens sind die Freiheitsgrade der Zapfpistole genau definiert, so daß die Zapfpistolen nur in einer definierten Lage und Einraststellung eingehängt werden können. Ferner können die Zapfpistolen nicht mehr zu tief eingeführt und seitlich verdreht werden, so daß eine Berührung außerhalb des Einfüllstutzens mit der Karosserie bzw. der Tankklappe und innerhalb des Einfüllstutzens mit der Innenwand des Einfüllrohres bzw. des Einfüllstutzens vermieden ist. Der Einfüllstutzen ist mit seinem oberen und unteren Abschnitt so ausgelegt, daß die Zapfpistolen beim Einführen automatisch in die Einraststellung gedrückt wird, wodurch sich ein Sicherheitsgewinn sowie eine einfachere Handhabung ergibt.

Der Einfüllstutzen kann mehrteilig hergestellt sein. Insbesondere kann der Einfüllstutzen aus einem den oberen und den unteren Abschnitt aufweisenden Einsatz bestehen, der vorzugsweise aus Kunststoff hergestellt ist. Dieser Einsatz ist in einem Fixiertopf angeordnet, der beispielsweise ein Blech- oder Stahlteil sein kann. Der Fixiertopf ist vorzugsweise in einem Kunststoffring angeordnet. Über den Kunststoffring ist eine Kappe mit einer Öffnung gestülpt, die an dem Kunststoffring befestigt ist. In dieser Kappe ist die Öffnung für den Verschlußdeckel vorgesehen. Durch die am Kunststoffring befestigte Kappe sind der Fixiertopf und der Einsatz in axialer Richtung nach außen in einfacher Weise gesichert. Der Kunststoffring ist bei einem Einfüllrohr aus Kunststoff direkt mit dem Einfüllrohr verschweißt. Besteht das Einfüllrohr aus Stahl oder Aluminium, dann ist eine geeignete dichte metallische oder nichtmetallische Verbindungstechnik vorzusehen.

In einer anderen Ausführungsform ist der Fixiertopf und der Einsatz als ein Bauteil ausgebildet, wobei an diesem Bauteil ggf. auch ein Lager für eine Verschluß- oder Bleifreiklappe integriert sein kann. Vorzugsweise besteht dieses Bauteil aufgrund der einfachen Herstellbarkeit aus Kunststoff. Insbesondere kann dieses Bauteil ein Spritzgußteil sein.

Eine Entlüftung der aus dem Kraftstoffbehälter beim Betankungsvorgang ausströmenden Dämpfe kann beispielsweise dadurch erfolgen, daß die Dämpfe zum einen durch den Ringspalt zwischen der Zapfpistole und dem Einsatz und zum anderen durch den Zwischenraum zwischen dem Fixiertopf und dem Einsatz und einer in dem Einsatz ausgebildeten Öffnung strömen. In einer anderen Ausführungsform ist an dem Fixiertopf ein Schlitz vorgesehen, der vorzugsweise in Höhe des unteren Endes des Einsatzes ausgebildet ist. Ferner sind in dem Einsatz Durchgangsöffnungen oder Rillen ausgebildet, durch die die Kraftstoffdämpfe nach außen strömen können. Die Stirnseiten der Stege oder Rillen sind vorzugsweise so angeschrägt, daß keine Behinderung beim Einführen der Zapfpistole auftritt.

Ferner ist eine Ablaufrille im Übergang zwischen dem oberen und dem unteren Abschnitt unterhalb des Hohlraumes zum Einrasten der Zapfpistole vorgesehen, so daß der am Ende des Betankungsvorganges aus der Zapfpistole herauslaufende Kraftstoff in den Kraftstoffbehälter fließt.

Zum Abführen elektrostatischer Aufladungen ist an der Kappe eine Erdungslasche angeordnet.

Ausführungsformen der Erfindung werden nachstehend anhand der Zeichnungen beispielshalber beschrieben. Dabei zeigen:
- Fig. 1: eine Prinzipskizze eines Einfüllstutzens im Längsschnitt mit einer im Einfüllstutzen eingerasteten Zapfpistole,
- Fig. 2: eine Draufsicht im Schnitt eines im Einfüllstutzen angeordneten Einsatzes längs der Linie I-I in der Fig. 1,
- Fig. 3: eine Ansicht des in der Fig. 1 gezeigten Einsatzes in Richtung des Pfeiles X der Fig. 1,
- Fig. 4: einen Längsschnitt einer weiteren Ausführungsform eines Einfüllstutzens,
- Fig. 5: eine Draufsicht auf den Einfüllstutzen der Fig. 4 in Richtung des Pfeiles Y in der Fig. 4,
- Fig. 6: einen Längsschnitt der in der Fig. 4 gezeigten Ausführungsform eines Einfüllstutzens, bei dem eine in den Einfüllstutzen eingeführte Zapfpistole mit einer Glocke für eine Gasrückführung versehen ist,
- Fig. 7: einen Längsschnitt der in der Fig. 4 dargestellten Ausführungsform eines Einfüllstutzens, bei dem eine in den Einfüllstutzen eingeführte Zapfpistole als Anschlag eine schraubenförmig gewundene Feder aufweist,
- Fig. 8: eine Ansicht in Richtung eines Pfeiles Z in der Fig. 7, bei der das Ende einer Zapfpistole auf den Rändern einer im Einfüllrohr ausgebildeten Ablaufrille aufliegt,
- Fig. 9: eine Schnittansicht längs der Linie A-A in der Fig. 6 bzw. Fig. 7, die die Anordnung der Zapfpistole in dem Einsatz zeigt,
- Fig. 10: einen Längsschnitt einer weiteren Ausführungsform eines Einfüllstutzens,
- Fig. 11: eine Schnittansicht längs der Linie II-II in Fig. 10.

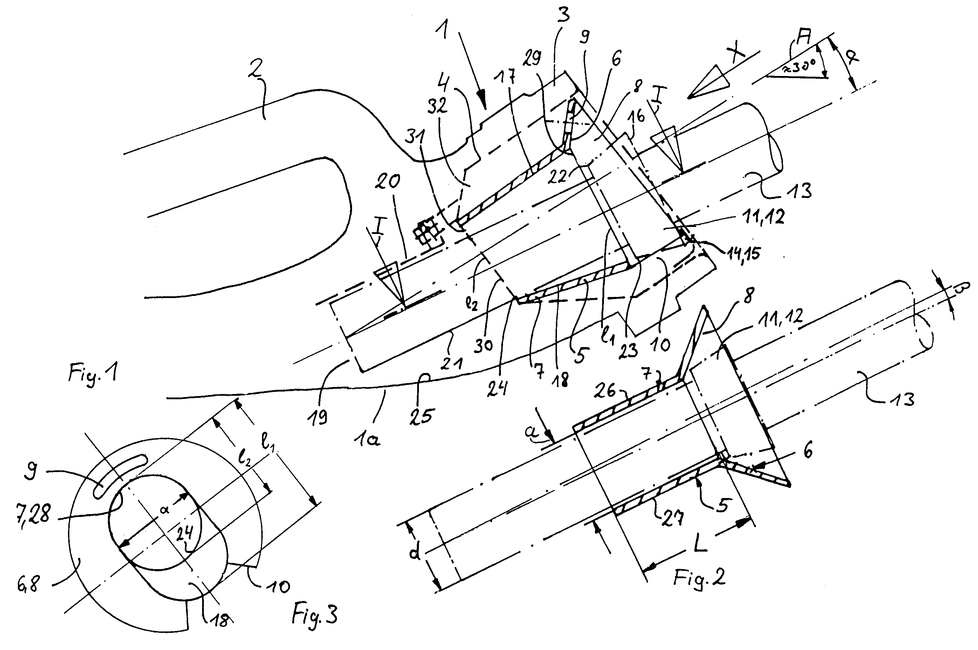

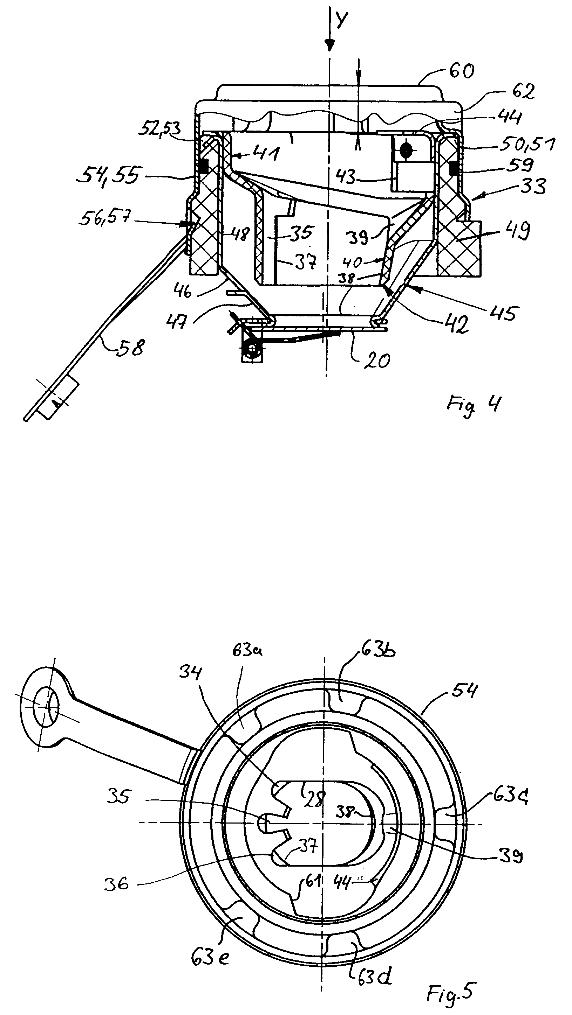

Die Fig. 1 zeigt einen Einfüllstutzen 1, der zu einem nicht dargestellten Kraftstoffbehälter führt. Ferner mündet in den Einfüllstutzen 1 eine Entlüftungsleitung 2. Am oberen Ende 3 des Einfüllstutzens 1 ist ein Fixiertopf 4 angeordnet, in dem ein Einsatz 5 befestigt ist. Der Einsatz 5 weist einen oberen Abschnitt 6 und einen unteren Abschnitt 7 auf. Wie auch aus den Figuren 2 und 3 hervorgeht, verlaufen die Seitenwände 8 des oberen Abschnittes 6 in der Form eines schrägen Kegels oder Trichters. Zum Ablassen von Kraftstoffdämpfen ist im oberen Abschnitt 6 eine Öffnung, z. B. ein Langloch 9, ausgebildet. Ferner weist der obere Abschnitt 6 eine Aussparung 10 auf, in die ein beispielsweise als kegeliger Ring 11 ausgebildeter Anschlag 12 einer Zapfpistole 13 zumindest teilweise hineinragt, wenn sich die Zapfpistole 13 in ihrer Raststellung befindet, wie dies in der Fig. 1 gezeigt ist. Die axiale Sicherung der Zapfpistole 13 nach außen ergibt sich durch einen als Einrastnase oder Haltelippe 14 ausgebildeten Vorsprung 15, an den die obere Stirnfläche 16 des Ringes 11 anliegt. Die Aussparung 10 des oberen Abschnittes 6 ist so bemessen, daß der Einsatz 5 durch eine Kippbewegung unterhalb der Haltelippe 14 montierbar ist.

Der untere Abschnitt 7 weist unterschiedlich geneigte obere und untere Begrenzungsflächen 17 und 18 auf. In der in der Fig. 1 gezeigten Ausführungsform verläuft die obere Begrenzungsfläche 17 parallel zur Neigung des Einfüllstutzens 1, wobei der Winkel zwischen der Horizontalen und der oberen Begrenzungsfläche 17 bzw. der Längsachse "A" des Einfüllstutzens 1 mindestens 30° beträgt, damit ein Mindestschutz gegen ein Auslaufen von Kraftstoff aus dem Einfüllstutzen 1 gegeben ist. Das vordere Ende bzw. die Mündung 19 der Zapfpistole 13 kann beim Einführvorgang der Zapfpistole 13 entlang der oberen Begrenzungsfläche 17 verschoben werden. Die Mündung 19 der Zapfpistole 13 stößt dann gegen eine Klappe 20, die in die in der Fig. 1 gezeigte Öffnungsstellung verschwenkt wird. Liegt auch das Rohr 21 der Zapfpistole 13 parallel zur oberen Begrenzungsfläche 17, dann berührt ein oberer Rand 22 des Ringes 11 die entsprechend gegenüberliegende Seitenwand 8 des oberen Abschnittes 6. Falls die Zapfpistole 13 waagrechter gehalten wird, ist ggf. ein Anheben der Zapfpistole 13 erforderlich, da sonst ein unterer Rand 23 des Ringes 11 an der Haltelippe 14 anstößt. In der Regel liegt jetzt die Zapfpistole 13 an einem vorderen, unteren Rand 24 des unteren Abschnittes 7 auf. Die Neigungen und Abmessungen der Seitenwände 8 des oberen Abschnittes 6 sowie der Begrenzungsflächen 17 und 18 des unteren Abschnittes 7 sind in Verbindung mit dem Anschlag 11, 12 der Zapfpistole 13 so aufeinander abgestimmt, daß die Mündung 19 der Zapfpistole 13 die Innenfläche 25 des mit dem Einfüllstutzen 1 verbundenen Einfüllrohres 1 a nicht berühren kann. Ist der Ring 11 der Zapfpistole 13 hinter der Haltelippe 14, dann rutscht die Zapfpistole 13 über den Ring 11 an den Seitenwänden 8 entlang zwangsläufig in die in dem Einsatz 5 ausgebildete Aussparung 10. Die untere Begrenzungsfläche 18 ist flacher geneigt als die Zapfpistole 13 in der Raststellung, deren Winkel ca. 30° gegenüber der Horizontalen beträgt. Durch die flachere Neigung der unteren Begrenzungsfläche 18 wird eine Anlage der Zapfpistole 13 an der Begrenzungsfläche 18 in der in der Fig. 1 gezeigten Raststellung der Zapfpistole 13 vermieden.

In der in der Fig. 2 gezeigten Schnittansicht von oben des Einsatzes 5 ist erkennbar, daß die beiden seitlichen Begrenzungsflächen 26, 27 parallel zueinander ausgebildet sind, wobei ein Abstand "a" zwischen den beiden seitlichen Begrenzungsflächen 26 und 27 um wenige Zehntel Millimeter größer ist als der Durchmesser "d" der Zapfpistole 13. Daraus resultiert ein sehr geringer Winkel "β", der in der Regel zwischen 1 bis 3° liegt.

In der Ansicht des Einsatzes 5 in der Fig. 3 ist der als Langloch 28 ausgebildete Querschnitt des unteren Abschnittes 7 ersichtlich. Die Länge "l₁" am Übergang 29 zwischen dem oberen Abschnitt 6 und dem unteren Abschnitt 7 ist in der in den Figuren 1 bis 3 gezeigten Ausführungsform größer als die Länge "l₂" am unteren Ende 30 des unteren Abschnittes 7.

Die aus dem Kraftstoffbehälter entweichenden Dämpfe können zum einen durch den verbleibenden Ringspalt 31 zwischen der Zapfpistole 13 und der oberen Begrenzungsfläche 17 und zum anderen über eine im Fixiertopf 4 ausgebildete Öffnung 32 und das im Einsatz 5 befindliche Langloch 9 entweichen.

Die in den Figuren 4 bis 9 dargestellte weitere Ausführungsform eines Einfüllstutzens 33 unterscheidet sich im wesentlichen dadurch, daß die Entlüftung der Kraftstoffdämpfe über Rillen oder Durchgangsöffnungen 34, 35, 36 erfolgt, die an einer oberen Begrenzungsfläche 37 ausgebildet sind.

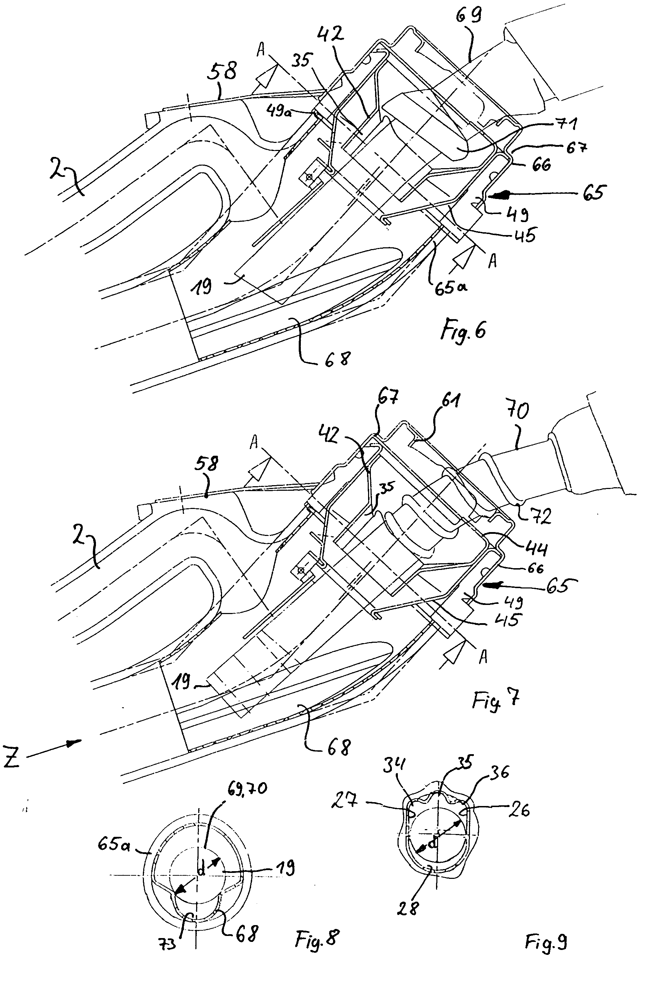

Ein weiterer Unterschied gegenüber der in den Figuren 1 bis 3 gezeigten Ausführungsform besteht bei der in den Figuren 4 und 5 gezeigten Ausführungsform darin, daß eine untere Begrenzungsfläche 38, die gegenüber der oberen Begrenzungsfläche 37 ausgebildet ist, mit einer Ablaufrinne 39 versehen ist, die eine Verbindung zwischen einem unteren Abschnitt 40 und einem oberen Abschnitt 41 herstellt. Die Ablaufrinne 39 dient dazu, daß ein sich im oberen Abschnitt 41 angesammelter Kraftstoff in den Kraftstoffbehälter zurückfließen kann. Der den unteren und oberen Abschnitt 40, 41 aufweisende Einsatz 42 ist als ein Kunststoffteil hergestellt. Dieser Einsatz 42 ist ebenfalls mit einer Aussparung 43 versehen, die unterhalb einer Haltelippe 44 im montierten Zustand des Einfüllstutzens 33 angeordnet ist. Die Haltelippe 44 ist an einem Fixiertopf 45 befestigt, der im vorliegenden Fall ein Blech- oder Stahlteil ist.

Zum Ablassen von Kraftstoffdämpfen aus dem Kraftstoffbehälter ist eine Öffnung 46 in einem unteren, trichterförmigen Abschnitt 47 des Fixiertopfes 45 ausgebildet, an den sich nach oben hin ein zylindrischer Abschnitt 48 anschließt. Der Fixiertopf 45 ist in einem Aufnahmering 49 eingepaßt. Zur axialen Sicherung nach innen ist der Fixiertopf 45 an seinem oberen Ende 50 mit einem nach außen gewölbten Flansch 51 versehen. An dem Flansch 51 ist mindestens eine Lasche 52 ausgebildet, die nach unten geneigt ist und die in eine in dem Aufnahmering 49 befindliche Aussparung 53 bei der Montage einrastet. Die Lasche 52 dient als Verdrehsicherung. Auf den Aufnahmering 49 ist eine Bajonettkappe 54 gestülpt, die an ihrer Mantelfläche 55 mindestens eine Lasche 56 aufweist, die bei der Montage in eine entsprechend in dem Aufnahmering 49 ausgebildete Aussparung 57 einrastet. An der in der Fig. 4 gezeigten Lasche 56 ist eine Erdungsleitung 58 befestigt. Zum Abdichten ist zwischen der Innenfläche der Bajonettkappe 54 und der Außenfläche des Aufnahmeringes 49 eine Dichtung 59 angeordnet.

An der Oberseite 60 der Bajonettkappe 54 ist, wie dies in der Fig. 5 gezeigt ist, eine Bajonettöffnung 61 für den nicht gezeigten Verschlußdeckel vorgesehen. Die Mantelfläche 55 weist an ihrem oberen Rand 62 Einbuchtungen 63 a bis e auf, die den Einsatz 42 und den Fixiertopf 45 in ihrer axialen Lage haltern. Bei einer axialen Belastung nach außen stützt sich die Bajonettkappe 54 an den vorhandenen Laschen 56 ab. Durch die Ausbildung von Einbuchtungen 63 a bis e ist es möglich, daß die Bajonettkappe 54 auch an ihrem oberen Rand 62 zylindrisch ausgebildet ist. Dies hat den Vorteil, daß die Montage einer nicht abgebildeten Verkleidung für den Hohlraum zwischen dem Einfüllstutzen 33 und der Karosserie bzw. der Tankklappe in einfacher Weise möglich ist.

Die Ausführungsform eines Einfüllstutzens 65 der Schnittansichten der Figuren 6 und 7 unterscheidet sich von der in den Figuren 4 und 5 gezeigten Ausführungsform zum einen darin, daß die Bajonettkappe 66 einen abgestuften oberen Rand 67 aufweist, der zur axialen Sicherung eines Aufnahmeringes 49, eines Fixiertopfes 45 und eines Einsatzes 42 dient. Der Aufnahmering 49 ist an seinem unteren Ende 49 a mit einem Einfüllrohr 65 a verbunden. Ferner ist der Einfüllstutzen 65 der Figuren 6 und 7 jeweils mit einer Rinne 68 versehen, auf die sich die Mündung 19 einer Zapfpistole 69 bzw. 70 abstützen kann, wie dies insbesondere auch aus der Fig. 8 hervorgeht. Die Rinne 68 dient dazu, daß der Kraftstoff frei aus der Zapfpistole 69 bzw. 70 ausströmen kann, ohne daß es zu einem Zurückspritzen des Kraftstoffes und damit zu einem Abschalten kommt.

Die Zapfpistole 69 ist mit einer Glocke 71 zur Rückführung von Kraftstoffdämpfen in einen geschlossenen Behälter oder dergleichen versehen.
Die Zapfpistole 70 ist mit einer Feder, insbesondere einer zylindrischen Schraubenfeder 72 versehen, die sich entweder an der Haltelippe 44 oder an der Bajonettöffnung 61 einhängt.

Wie aus der Fig. 8 ersichtlich ist, ist der Durchmesser d der Zapfpistole 69 bzw. 70 größer als die maximale Breite der Rinne 68, so daß die Mündung 19 der Zapfpistole 69 bzw. 70 beabstandet vom unteren Rand 73 der Rinne 68 ist.

Aus der Schnittansicht der Fig. 9 geht hervor, daß der Durchmesser "d" der Zapfpistole 69 bzw. 70 ungefähr mit dem Abstand der seitlichen Begrenzungsflächen 26, 27 übereinstimmt. Ferner sind in der Fig. 9 die Größen und der Verlauf der Rillen 34, 35, 36 erkennbar.

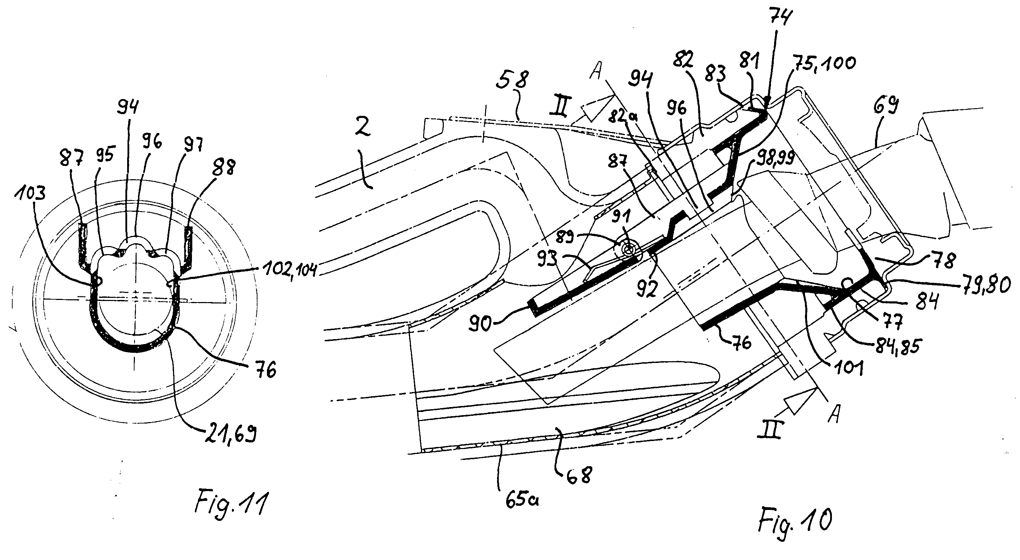

Die Ausführungsform eines in den Figuren 10 und 11 gezeigten Einfüllstutzens zeichnet sich dadurch aus, daß der Fixiertopf und der Einsatz als eine Baueinheit 74 aus einem einzigen Werkstoff hergestellt sind. Die Baueinheit 74 weist wie die vorhergehenden Ausführungsformen einen oberen und unteren Abschnitt 75 und 76 zum lagerichtigen Einführen und Verrasten einer Zapfpistole 69 auf. An dem oberen Abschnitt 75 ist ein Aufnahmeraum 77 für die Zapfpistole 69 vorgesehen, an dem einstückig eine Haltelippe 78 ausgebildet ist. Ferner weist der obere Rand 79 des oberen Abschnittes 75 einen Flansch 80 auf, der mit mindestens einer als Verdrehsicherung dienenden Lasche 81 versehen ist. Die Lasche 81 rastet in eine in einem Aufnahmering 82 ausgebildete Aussparung 83 ein. Durch den Flansch 80 ist die Baueinheit 74 gegen eine axiale Verschiebung nach innen gesichert. Der obere Abschnitt 75 weist ferner einen zylindrischen Abschnitt 84 auf, dessen Außenfläche 85 in einen zylindrischen Abschnitt 86 des Aufnahmeringes 82 eingepaßt ist. Auf diese Weise ergibt sich eine radiale Fixierung der Baueinheit 74.

Am unteren Abschnitt 76 ist ein zwei Rippen 87 und 88 aufweisendes Lager 89 für eine Verschlußklappe 90 ausgebildet. Die Lagerung der Verschlußklappe 90 erfolgt über einen in den Rippen 87 und 88 gehalterten Stift 91, der als Drehachse dient. Zwischen der Verschlußklappe 90 und einem unteren Rand 92 ist eine Rückstellfeder 93 für die Klappe 90 angeordnet. Zwischen den Rippen 87 und 88 ist in dem unteren Abschnitt 76 eine Öffnung 94 vorhanden, durch die die beim Betankungsvorgang entstehenden und die aus dem Kraftstoffbehälter kommenden Dämpfe oder Gase hindurchströmen können. Die Öffnung 94 mündet in der in den Figuren 10 und 11 gezeigten Ausführungsform in Rillen 95, 96, 97, die in dem unteren Abschnitt 76 angeformt sind. Die Rillen 95, 96, 97 sind an ihrer nach außen hinzeigenden jeweiligen Stirnseite 98 mit einer Abschrägung 99 versehen, deren Neigung vorzugsweise mit der Neigung der Seitenwände 100 des oberen Abschnittes 75 übereinstimmt. Ferner ist in der Baueinheit 74 in dem Übergangsbereich zwischen dem oberen und dem unteren Abschnitt 75, 76 eine Ablaufrinne 101 vorgesehen.

In der Schnittansicht der Fig. 11 ist der Verlauf der Rippen 87, 88 sowie der Öffnung 94 erkennbar. Ferner ist ersichtlich, daß der Querschnitt des unteren Abschnittes 76 in etwa einem Langloch 102 entspricht, dessen seitliche Begrenzungsflächen 103 und 104 parallel zueinander verlaufen und deren Abstand zueinander etwas größer ist als der Durchmesser des Rohres 21 der Zapfpistole 69. Die Länge des Langloches 102 ist wie bei den vorhergehenden Ausführungsformen ebenfalls größer als der Durchmesser des Rohres 21 der Zapfpistole 69. Aufgrund dieser Abmessungen ist nur eine Auf- und Abbewegung der Zapfpistole 69 in dem unteren Abschnitt 76 möglich.

## Patentansprüche

1. Einfüllstutzen, mit einem oberen Abschnitt, der schräg verlaufende Seitenwände als Einführhilfe und als Tiefenanschlag für eine Zapfpistole aufweist und einem sich daran anschließenden unteren Abschnitt, mit einem kleineren Durchmesser, der zur Führung und Lagefixierung der Zapfpistole in radialer Richtung dient, dadurch gekennzeichnet, daß der untere Abschnitt (7, 40, 76) im Querschnitt ein Langloch (28; 102) aufweist, dessen Abstand "a" zwischen zwei seitlichen, parallel verlaufenden Begrenzungsflächen (26, 27; 103, 104) in etwa dem Durchmesser "d" der Zapfpistole (13, 69, 70) entspricht, daß die dazu senkrechte Länge "l₁, l₂" des Langloches (28; 102) über die Länge "L" des unteren Abschnittes (7, 40, 76) so groß ist, daß eine Zapfpistole (13, 69, 70) mit ihrem Anschlag (12; 11, 71, 72) über eine Haltelippe oder dergleichen (14, 15; 44, 78; 61) hinwegbewegbar ist.

2. Einfüllstutzen nach Anspruch 1, dadurch gekennzeichnet, daß der Anschlag (12; 11, 71, 72) nach dem Überschreiten der Haltelippe oder dergleichen (14, 15; 44, 78; 61) an den Seitenwänden (8) des oberen Abschnittes (6, 41, 75) anstößt und anschließend durch die Seitenwände (8) geführt nach unten in eine formschlüssige Lagefixierung (10, 43, 77) einrastet.

3. Einfüllstutzen nach den Ansprüchen 1 oder 2, dadurch gekennzeichnet, daß die Haltelippe (14, 15, 44, 78; 61) am oberen Rand eines Einsatzes (5, 42) oder eines Fixiertopfes (4) oder einer Baueinheit (74) oder einer Bajonettkappe (54) gebildet ist.

4. Einfüllstutzen nach einem oder mehreren der vorhergehenden Ansprüche, dadurch gekennzeichnet, daß aufgrund der in Einführrichtung parallel verlaufenden, seitlichen Begrenzungsflächen (26, 27; 103, 104) nur eine Auf- und Abbewegung der Zapfpistole (13, 69, 70) in der vertikalen Richtung möglich ist und daß die Form und Abmessungen des Einfüllstutzens (1, 33, 65) in Abhängigkeit von der verwendeten Zapfpistole (13, 69, 70) so gewählt sind, daß dieser Schwenkwinkel "α" ca. 10° ± 3 beträgt.

5. Einfüllstutzen nach einem oder mehreren der vorhergehenden Ansprüche, dadurch gekennzeichnet, daß das Spiel zwischen den seitlichen Begrenzungsflächen (26, 27; 103, 104) und der Zapfpistole (13, 69, 70), so bemessen ist, daß sich ein Verschwenkwinkel "β" von ca. 3° ± 2° in Richtung der seitlichen Begrenzungsflächen (26, 27; 103, 104) ergibt.

6. Einfüllstutzen nach einem oder mehreren der vorhergehenden Ansprüche, dadurch gekennzeichnet, daß im unteren Rand des oberen Abschnittes (6) eine Aussparung (10, 43) zur Aufnahme des Anschlages (12; 11, 71, 72) vorgesehen ist und daß diese Aussparung (10, 43) durch eine Haltelippe (14, 15; 44, 78; 61) zumindest teilweise überdeckt ist.

7. Einfüllstutzen nach einem oder mehreren der vorhergehenden Ansprüche, dadurch gekennzeichnet, daß unterhalb der Aussparung (10, 43) eine Ablaufrinne (39) vorgesehen ist, deren Steigung so bemessen ist, daß ein in die Aussparung (10, 43) gelangter Kraftstoff in den unteren Abschnitt (7, 40, 76) bzw. in den Kraftstoffbehälter abfließt.

8. Einfüllstutzen nach einem oder mehreren der vorhergehenden Ansprüche, dadurch gekennzeichnet, daß der Einsatz (5, 42) ein separates Bauteil ist, der in einen Fixiertopf (4, 45) so eingepaßt ist, daß zumindest der obere Außenrand des oberen Abschnittes (6, 41) anliegt und daß ggf. ein unterer Außenrand (30, 24) des unteren Abschnittes (7) an einem unteren Rand des Fixiertopfes (4) anliegt.

9. Einfüllstutzen nach einem oder mehreren der vorhergehenden Ansprüche, dadurch gekennzeichnet, daß in dem Fixiertopf (4, 45) eine Öffnung (32, 46) zur Entlüftung vorgesehen ist und daß am oberen Abschnitt (6) des Einsatzes (5) eine insbesondere als Langloch ausgebildete Öffnung (9) zur Entlüftung vorgesehen ist und/oder daß im unteren Abschnitt (40) mindestens eine Rille (34, 35, 36) ausgebildet ist, durch die Kraftstoffdämpfe nach außen strömen können.

10. Einfüllstutzen nach einem oder mehreren der vorhergehenden Ansprüche, dadurch gekennzeichnet, daß der Fixiertopf (4, 45) in einem Aufnahmering (49) gehaltert ist und daß über den Aufnahmering (49) eine Bajonettkappe (54) gestülpt ist.

11. Einfüllstutzen nach einem oder mehreren der vorhergehenden Ansprüche, dadurch gekennzeichnet, daß unterhalb des Fixiertopfes (45) eine Rinne (68) im Einfüllrohr (65 a) ausgebildet ist.

12. Einfüllstutzen nach einem oder mehreren der vorhergehenden Ansprüche, dadurch gekennzeichnet, daß an der Bajonettkappe (54) eine Erdungsleitung (58) angeordnet ist, die in leitender Verbindung mit dem Einfüllrohr (65 a) bzw. eine Entlüftungsleitung (2) steht.

13. Einfüllstutzen nach einem oder mehreren der vorhergehenden Ansprüche, dadurch gekennzeichnet, daß der Fixiertopf und der Einsatz in einer Baueinheit (74) integriert sind und daß ggf. ein Lager (89) für eine Verschlußklappe (90) an der Baueinheit (74) angeformt ist.

14. Einfüllstutzen nach Anspruch 13, dadurch gekennzeichnet, daß die Baueinheit (74) aus Kunststoff ist und insbesondere ein Spritzgußteil ist.

## Claims

1. A filler pipe with an upper portion having sloping side walls as a help in insertion and an abutment for the depth of insertion of a pump pistol and with an adjacent smaller-dimension lower portion for guiding and securing the pump pistol in position in the radial direction, characterised in that the lower portion (7, 40, 76) is formed in cross-section with a slot (28; 102) having a spacing "a" between two lateral parallel boundary surfaces (26, 27; 103, 104) approximately equal to the diameter "d" of the pump pistol (13, 69, 70), and the length "l₁, l₂" of the slot (28; 102) perpendicular thereto and over the length "L" of the lower portion (7, 40, 76) is sufficient for the abutment (12; 11, 71, 72) of a pump pistol (13, 69, 70) to be movable along a retaining lip or the like (14, 15; 44, 78; 61).

2. A filler pipe according to claim 1, characterised in that the abutment (12; 11, 71, 72) after moving over the retaining lip or the like (14, 15; 44, 78; 61) abuts the side walls (8) of the upper portion (6, 41, 75) and is subsequently guided by the side walls (8) downwards into engagement in a positive position-securing means (10, 43, 77).

3. A filler pipe according to claim 1 or claim 2, characterised in that the retaining lip (14, 15, 44, 78; 61) is formed on the top edge of an insert (5, 42) or a securing casing (4) or a structural unit (74) or a bayonet cap (54).

4. A filler pipe according to one or more of the preceding claims, characterised in that as a result of the lateral boundary surfaces (26, 27; 103, 104) extending parallel in the direction of insertion, the pump pistol (13, 69, 70) can move only upwards and downwards in the vertical direction, and the shape and dimensions of the filler pipe (1, 33, 65) are chosen in dependence on the pump pistol (13, 69, 70) so that the pivoting angle "α" is about 10 ± 3°.

5. A filler pipe according to one or more of the preceding claims, characterised in that the clearance between the lateral boundary surfaces (26, 27; 103, 104) and the pump pistol (13, 69, 70) is dimensioned so as to obtain a pivoting angle "β" of about 3 ± 2° in the direction of the lateral boundary surfaces (26, 27; 103, 104).

6. A filler pipe according to one or more of the preceding claims, characterised in that the bottom edge of the upper portion (6) is formed with a recess (10, 43) for receiving the abutment (12; 11, 71, 72), and the recess (10, 43) is at least partly covered by a retaining lip (14, 15; 44, 78; 61).

7. A filler pipe according to one or more of the preceding claims, characterised in that a drainage channel (39) is provided below the recess (10, 43) and is given a slope such that fuel reaching the recess (10, 43) flows into the bottom portion (7, 40, 76) or into the fuel container.

8. A filler pipe according to one or more of the preceding claims, characterised in that the insert (5, 42) is a separate component which is so fitted into a securing casing (4, 45) that at least the top outer edge of the upper portion (6, 41) and, if required, a bottom outer edge (30, 24) of the lower portion (7) abut a bottom edge of the securing casing (4).

9. A filler pipe according to one or more of the preceding claims, characterised in that the securing casing (4, 45) is formed with a vent opening (32, 46) and the upper portion (6) of the insert (5) is formed with a vent opening (9), especially a slot, and/or at least one groove (34, 35, 36) is formed in the bottom portion (40) so that fuel vapours can flow out through it.

10. A filler pipe according to one or more of the preceding claims, characterised in that the securing casing (4, 45) is held and received in a ring (49), and a bayonet cap (54) is inverted over the ring (49).

11. A filler pipe according to one or more of the preceding claims, characterised in that a channel (68) is formed in the filler tube (65a) below the securing casing (45).

12. A filler pipe according to one or more of the preceding claims, characterised in that an earth wire (58) is disposed on the bayonet cap (54) and is conductively connected to the filler tube (65a) or to a vent pipe (2).

13. A filler pipe according to one or more of the preceding claims, characterised in that the securing casing and the insert are incorporated in a structural unit (74), and a bearing (89) for a closure valve (90) is optionally integrally formed on the structural unit (74).

14. A filler pipe according to claim 13, characterised in that the structural unit (74) is of plastics material and especially is injection-moulded.

## Revendications

1. Embout de remplissage, comprenant une partie supérieure à parois latérales en pente servant d'aide à l'engagement et de butée d'enfoncement d'un pistolet distributeur, suivie d'une partie inférieure de plus petit diamètre, servant à guider et à fixer en direction radiale la position du pistolet,
caractérisé en ce que
la partie inférieure (7, 40, 76) a une section transversale dessinant un trou oblong (28 ; 102) dont la distance 〈〈 a 〉〉 entre les deux bords latéraux parallèles (26, 27 ; 103, 104) correspond sensiblement au diamètre 〈〈 d 〉〉 du pistolet distributeur (13, 69, 70) tandis que la longueur dans la direction perpendiculaire 〈〈 l₁, l₂ 〉〉 du trou oblong (28, 102) est, par rapport à la longueur 〈〈 L 〉〉 de la partie inférieure (7, 40, 76) dimensionnée de manière qu'un pistolet distributeur (13, 69, 70) équipé d'une butée (12, 11, 71, 72) puisse être déplacé sur une lèvre de maintien ou organe analogue (14, 15 ; 44, 78 ; 61).

2. Embout de remplissage selon la revendication 1,
caractérisé en ce que
la butée (12 ; 11, 71, 72) après qu'elle ait dépassé la lèvre de maintien ou organe analogue (14, 15 ; 44, 78, 61) rencontre les parois latérales (8) de la partie supérieure (6, 41, 75) et, guidée par ces parois vers le bas, vient se bloquer dans une fixation (10, 43, 77) à combinaison de formes.

3. Embout de remplissage selon la revendication 1 ou 2,
caractérisé en ce que
la lèvre de maintien (14, 15, 44, 78 ; 61) est située sur le bord supérieur d'un insert (5, 42) ou d'un puits de fixation (4) ou d'un ensemble (74), ou d'un capot à baïonnette (54).

4. Embout de remplissage selon l'une ou plusieurs des revendications précédentes,
caractérisé en ce que
les parois latérales (26, 27 ; 103, 104) parallèles à la direction d'engagement ne permettent qu'un mouvement d'avancée et de recul dans la direction verticale, du pistolet de remplissage (13, 69, 70), la forme et les dimensions de l'embout de remplissage (1, 33, 65) étant choisies en fonction du pistolet (13, 69, 70) utilisé, de manière que l'angle d'oscillation 〈〈 α 〉〉 soit de 10 ± 3 degrés environ.

5. Embout de remplissage selon l'une ou plusieurs des revendications précédentes,
caractérisé en ce que
le jeu entre les parois latérales (26, 27 ; 103, 104) et le pistolet distributeur (13, 69, 70) est dimensionné de manière à donner un angle d'oscillation 〈〈 β 〉〉 de 3 ± 2 degrés environ, en direction des parois latérales (26, 27 ; 103, 104).

6. Embout de remplissage selon l'une ou plusieurs des revendications précédentes,
caractérisé en ce que
dans le bord inférieur de la partie supérieure (6) est prévu un évidement (10, 43) destiné à accueillir la butée (12, 11, 71, 72), cet évidement (10, 43) étant recouvert au moins partiellement par une lèvre de maintien (14, 15 ; 44, 78 ; 61).

7. Embout de remplissage selon l'une ou plusieurs des revendications précédentes,
caractérisé en ce que
il est prévu, en dessous de l'évidement (10, 43), une rigole d'évacuation (39) dont l'inclinaison est telle que du carburant pénétrant dans l'évidement (10, 43) s'écoule dans la partie inférieure (7, 40, 76) et dans le réservoir de carburant.

8. Embout de remplissage selon l'une ou plusieurs des revendications précédentes,
caractérisé en ce que
l'insert (5, 42) est une pièce séparée ajustée dans un puits de fixation (4, 45) de manière que s'appuie sur le bord inférieur du puits (4), le bord supérieur externe de la partie supérieure (6, 41) et, le cas échéant, aussi le bord inférieur externe (30, 24) de la partie inférieure (7).

9. Embout de remplissage selon l'une ou plusieurs des revendications précédentes,
caractérisé en ce que
le puits de fixation (4, 45) comporte une ouverture (32, 46) de dégazage, la partie supérieure (6) de l'insert (5) étant percée d'une ouverture de dégazage notamment en forme de trou oblong, et/ou la partie inférieure (40) comportant au moins une rigole (34, 35, 36) permettant aux vapeurs de carburant de s'évacuer à l'extérieur.

10. Embout de remplissage selon l'une ou plusieurs des revendications précédentes,
caractérisé en ce que
le puits de fixation (4, 45) est maintenu à l'intérieur d'une bague réceptrice (49) surmontée d'un capot à baïonnette (54).

11. Embout de remplissage selon l'une ou plusieurs des revendications précédentes,
caractérisé en ce que
le tube de remplissage (65a) comporte une rigole (68) située en dessous du puits de fixation (45).

12. Embout de remplissage selon l'une ou plusieurs des revendications précédentes,
caractérisé en ce que
le capot à baïonnette (54) est équipé d'un conducteur (58) de mise à la terre relié au tube de remplissage (65a) et à une canalisation de dégazage (2).

13. Embout de remplissage selon l'une ou plusieurs des revendications précédentes,
caractérisé en ce que
le puits de fixation et l'insert sont intégrés dans un ensemble (74), un palier (89) destiné à un clapet obturateur (90) étant moulé éventuellement sur cet ensemble (74).

14. Embout de remplissage selon la revendication 13,
caractérisé en ce que
l'ensemble (74) est une pièce en matière plastique, en particulier une pièce moulée par injection.
